Europäisches Patentamt

**European Patent Office**

Office européen des brevets

(11) Veröffentlichungsnummer: **0 027 181**
**A2**

(12) **EUROPÄISCHE PATENTANMELDUNG**

(21) Anmeldenummer: **80105521.1**

(22) Anmeldetag: **13.09.80**

(51) Int. Cl.³: **G 01 F 1/60**

(30) Priorität: **12.10.79 DE 2941383**

(43) Veröffentlichungstag der Anmeldung:
**22.04.81 Patentblatt 81/16**

(84) Benannte Vertragsstaaten:
**AT BE CH DE FR GB IT LI NL SE**

(71) Anmelder: **Turbo-Werk Fritz Hammelrath**
**Gremberger Strasse 151**
**D-5000 Köln 91(DE)**

(72) Erfinder: **Doll, Friedhelm, Dipl.-Ing.**
**Hoofnung 16**
**D-5632 Wermelskirchen(DE)**

(74) Vertreter: **Selting, Günther, Dipl.-Ing. et al,**
**Deichmannhaus am Hauptbahnhof**
**D-5000 Köln 1(DE)**

(54) **Induktiver Durchflussmesser.**

(57) Bei einem induktiven Durchflußmesser wird in einem Flüssigkeitskanal ein periodisch veränderliches Magnetfeld erzeugt. Das infolge des Magnetfeldes in der Flüssigkeit entstehende elektrische Potential wird über Elektroden gemessen und über Kondensatoren (16,19) einem Eingangsverstärker (18) zugeführt. Der Eingang des Eingangsverstärkers (18) wird über einen periodisch betätigten Schalter (35) mit Nullpotential verbunden, um keine Erdableitwiderstände am Verstärkereingang einsetzen zu müssen. Während der Schließphasen des Schalters (35) wird die Auswertung des Meßergebnisses unterdrückt.

FIG. 2

EP 0 027 181 A2

VON KREISLER    SCHÖNWALD    EISHOLD    F0027181
VON KREISLER    KELLER    SELTING    WERNER

PATENTANWÄLTE

Dr.-Ing. von Kreisler † 1973
Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln

Sg/kh
DEICHMANNHAUS AM HAUPTBAHNHOF
D-5000 KÖLN 1

Anmelder:

Turbo-Werk
Fritz Hammelrath
Hospeltstraße 44
5000 Köln 30

Induktiver Durchflußmesser

Die Erfindung betrifft einen induktiven Durchflußmesser mit einer elektrisch gesteuerten Magnetanordnung und mit Elektroden, die kapazitiv an eine
Auswerteschaltung mit einem hochohmigen Eingangsverstärker angeschlossen sind.

Bei einem bekannten Durchflußmesser dieser Art (DE-OS
26 19 971), ist der Eingangsverstärker der Auswerteschaltung ein Differenzverstärker, an dessen beide
Eingänge die Elektroden über Kapazitäten angekoppelt
sind. Die Auswerteschaltung enthält einen Steuerteil,
der zwei Spannungsabtastschalter abwechselnd periodisch
betätigt, die die zwischen den Elektroden herrschende
Spannung jeweils zu den Abtastzeiten an Spannungsabtastspeicher weiterleiten. Die Ausgangssignale der Spannungsabtastspeicher werden einem Differenzverstärker zugeführt, der das Ausgangssignal liefert. Der Steuerteil
der Auswerteschaltung steuert gleichzeitig einen Stromerzeuger für die Magnetanordnung in der Weise, daß der
Erregerstrom abwechselnd linear ansteigende und linear
abfallende Flanken hat.

Telefon: (02 21) 13 10 41 · Telex: 888 2307 dopa d · Telegramm: Dompatent Köln

Die kapazitive Kopplung zwischen den Elektroden und dem Eingangsverstärker dient dazu, das Gleichspannungspotential der Elektroden vom Verstärkereingang fernzuhalten. Da die Nutzspannung an den Elektroden eine niedrige Frequenz hat und da die Messung, insbesondere bei Flüssigkeiten geringer Leitfähigkeit, mit einem hochohmigen Eingangsverstärker erfolgen muß, müssen zwischen die Kapazitäten und den Verstärkereingang hochohmige Erdableitwiderstände geschaltet werden, deren Widerstandswerte in der Größenordnung von einigen Gigaohm liegen. Solche Erdableitwiderstände haben große räumliche Abmessungen, sind teuer und stellen auch ein gewisses Zuverlässigkeitsrisiko dar. Ein weiterer Nachteil besteht darin, daß die Erdableitwiderstände zusammen mit den Koppelkondensatoren Zeitglieder mit hoher Zeitkonstante bilden. Tritt am Verstärkereingang ein Störimpuls mit hoher Amplitude auf, durch den der Verstärker in die Sättigung getrieben wird, dann können sich die Koppelkondensatoren über die Erdableitwiderstände nur langsam entladen, so daß der Verstärker längere Zeit in der Sättigung verbleibt und für die Messung ausfällt. Ein weiterer Nachteil der bekannten Schaltung besteht darin, daß trotz der Verwendung hochohmiger Erdableitwiderstände der Eingangswiderstand des Eingangsverstärkers, der bei Verwendung von FET-Transistoren noch weit hochohmiger ist, verschlechtert wird.

Aufgabe der Erfindung ist es, einen induktiven Durchflußmesser der eingangs genannten Art zu schaffen, der ohne Erdableitwiderstände an den Koppelkondensatoren auskommt. Dadurch soll im Falle einer Übersteuerung des Verstärkers durch Störimpulse die Erholzeit des Verstärkers herabgesetzt werden. Außerdem soll der hohe Eingangswiderstand des Eingangsverstärkers voll ausgenutzt werden.

Zur Lösung dieser Aufgabe ist erfindungsgemäß vorgesehen, daß der Eingang des Eingangsverstärkers über
einen periodisch betätigten Schalter mit Null-
Potential verbindbar ist.

Nach der Erfindung ist somit der Erdableitwiderstand
der bekannten Eingangsverstärker durch einen Schalter ersetzt. Bei dem Schalter kann es sich um einen
hochohmigen elektronischen Schalter oder um einen
mechanischen Schalter handeln. Infolge der periodischen Betätigung des Schalters wird der Verstärkereingang in regelmäßigen Zeitabständen an Null-
Potential gelegt. Sollte sich der Koppelkondensator infolge eines Störimpulses aufgeladen haben,
dann wird er während der Schließphasen des Schalters
niederohmig mit Null-Potential verbunden, so daß die
Ladung schnell abfließen kann. Die Auswertung des
Meßergebnisses wird daher höchstens über eine Phase
der periodischen Betätigung des Schalters unterbunden.

Da (mechanische oder elektronische) Schalter zur
Verfügung stehen, die im Sperrzustand wesentlich
hochohmiger sind als die üblichen Erdableitwiderstände, wird der Eingangswiderstand des Eingangsverstärkers bei gesperrtem Schalter nicht wesentlich herabgesetzt. Damit sind extrem hochohmige
Messungen auch an Flüssigkeiten mit geringer Leitfähigkeit möglich.

Vorzugsweise ist der Eingangsverstärker ein Differenzverstärker, dessen beide Eingänge über den Schaltern mit Null-Potential verbindbar sind. Dabei schaltet der Schalter beide Verstärkereingänge synchron entweder an die jeweiligen Koppelkondensatoren oder an Null-Potential.

In vorteilhafter Weiterbildung der Erfindung enthält die Auswerteschaltung einen Steuerteil, der, wie an sich bekannt, die Ausgangssignale des Eingangsverstärkers zu periodisch auftretenden Abtastzeitpunkten Spannungsabtastspeichern zuführt und der Schalter ist von dem Steuerteil derart gesteuert, daß er nach jedem Abtastzeitpunkt geschlossen wird. Im Anschluß an die Messung im jeweiligen Abtastzeitpunkt wird also der Koppelkondensator niederohmig nach Masse entladen. Vor und während der Abtastzeitpunkte ist der Verstärker dagegen über die Koppelkondensatoren mit den Elektroden verbunden. Wenn die Koppelkondensatoren mit Schutzwiderständen in Reihe geschaltet sind, müssen die Schließzeiten des Schalters so bemessen werden, daß die Ladungen der Koppelkondensatoren über die Schutzwiderstände voll nach Null-Potential abfließen können.

Die Steuerung des Schalters erfolgt zweckmäßigerweise durch den Steuerteil, der auch die Zeitpunkte der Spannungsabtastung festlegt, in der Weise, daß der Schalter unmittelbar im Anschluß an die Abtastzeitpunkte geschlossen wird. Wenn der Steuerteil eine von einer Impulsquelle gesteuerte Zählschaltung enthält, kann ein Ausgang der Zählschaltung mit der Steuerleitung des Schalters verbunden sein.

In vorteilhafter Weiterbildung der Erfindung steuert der Steuerteil einen Stromgenerator für die Magnetanordnung zur Erzeugung eines linear ansteigenden und linear abfallenden Erregerstromes und ein synchron mit dem Schalter des Eingangsverstärkers betätigter zweiter Schalter schaltet den Stromgenerator im geschlossenen Zustand aus. Dadurch kann eine erhebliche Verminderung der Leistungsaufnahme der gesamten Meßeinrichtung erreicht werden. Dies führt zusammen mit dem linearen Stromanstieg des z.B. dreieckförmigen oder trapezförmigen Grundverlaufes des Erregerstromes zu einem Gerät mit hoher Signalausbeute bei relativ geringer Leistungsaufnahme.

Wenn der Stromgenerator einen als Integrator geschalteten Verstärker enthält, dem von der Zählschaltung Rechtecksignale zugeführt werden, ist der zweite Schalter in vorteilhafter Weiterbildung der Erfindung derart geschaltet, daß er den Verstärker kurzschließt. An den Ausgang des Verstärkers kann eine Spannungsbegrenzerschaltung angeschlossen sein. Die Spannungsbegrenzerschaltung gewährleistet, daß der Erregerstrom im Meßzeitpunkt den vorgesehenen Wert hat, unabhängig von Frequenzabweichungen des Impulsgenerators bzw. unabhängig von der Netzfrequenz, die wahlweise 50 Hz oder 60 Hz betragen kann.

Im folgenden wird unter Bezugnahme auf die Figuren ein bevorzugtes Ausführungsbeispiel der Erfindung näher erläutert.

Es zeigen:

Figur 1 den mechanischen Aufbau eines induktiven
Durchflußmessers bekannter Bauart,

Figur 2 ein Blockschaltbild der erfindungsgemäßen
Auswerteschaltung und

Figur 3 die zeitlichen Verläufe verschiedenen Spannungen und Ströme in der Auswerteschaltung nach Figur 2.

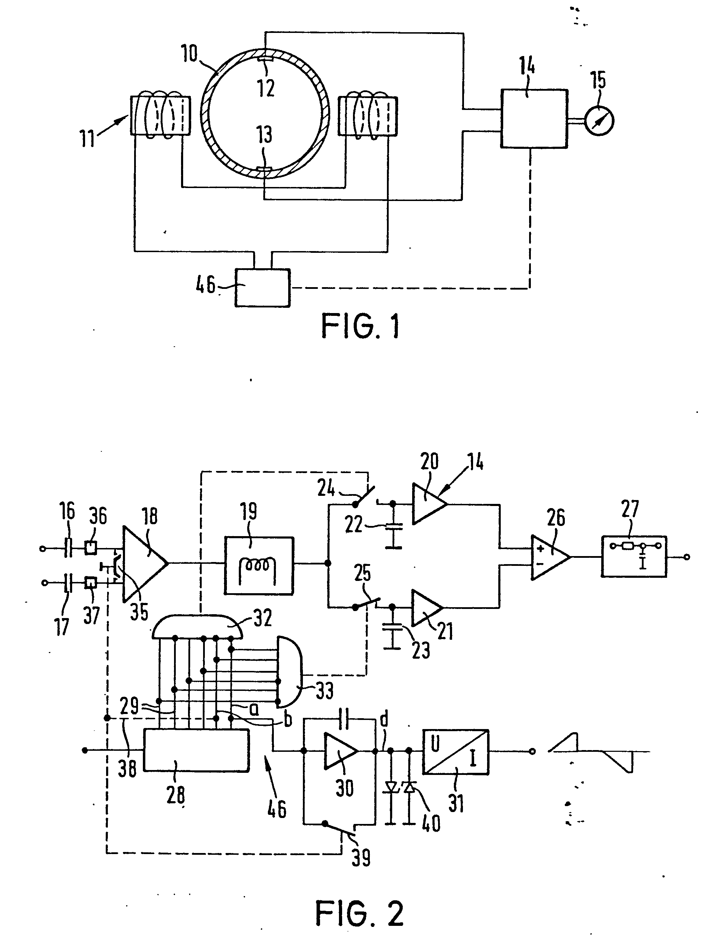

Gemäß Fig. 1 ist an einem Meßrohr 10 aus amagnetischem Material eine Magnetspule 11 angebracht, die ein durch das Rohr 10 hindurchgehendes Magnetfeld erzeugt. Im Inneren des Rohres sind zwei Elektroden 12, 13 angeordnet, die einander diametral gegenüberliegen und deren gedachte Verbindunglinie das Magnetfeld senkrecht schneidet. Die Elektroden 12, 13 sind mit dem Eingang der Auswerteschaltung 14 verbunden. Die Meßspannung wird an dem an die Auswerteschaltung 14 angeschlossenen Meßinstrument 15 abgelesen. Zur Erzeugung des Magnetfeldes ist die Magnetspule 11 mit einer Steuerschaltung 46 verbunden, die der Magnetwicklung einen Strom bestimmter Kurvenform einprägt und nach der Erfindung darüber hinaus auch die Abtastzeitpunkte in der Auswerteschaltung 14 steuert.

Ein Blockschaltbild der Auswerteschaltung 14 und der Steuerschaltung 46 ist in Fig. 2 abgebildet. Die von den Elektroden 12, 13 kommenden Eingangsleitungen der Auswerteschaltung 14 sind über jeweils einen Blockkondensator 16 bzw. 17 mit einem Eingangsanschluß des Verstärkers 18 verbunden. Der Ausgang des Verstärkers 18 ist über einen Tiefpaß 19, dessen Grenzfrequenz unterhalb 16 Hz liegt, mit den beiden Spannungsabtastspeichern 20 und 21 verbunden. Jedem der Spannungsabtastspeicher ist ein Halte-kondensator 22 bzw. 23 vorgeschaltet und die Steuerung des Abtastzeitpunktes erfolgt über jeweils einen Schalter 24 und 25, der von der Steuerschaltung 15 aus gesteuert wird. Die Schalter 24 und 25 sind aus Gründen der Einfachheit der Darstellung als mechanische Schalter angedeutet. Bei der praktischen Realisierung der Schaltung wird man jedoch elektronische Schalter verwenden.

Die Ausgangsleitung der Spannungsabtastspeicher 20 und 21 sind mit den Eingängen eines Differenzverstärkers 26 verbunden und diesem ist ein Mittelwertbildner 27 nachgeschaltet. Der Ausgang des Mittelwertbildners 27 bildet gleichzeitig den Ausgang der Auswerteschaltung 14, so daß das entsprechende Ausgangssignal dem Anzeigegerät 15 zugeführt wird.

Das Steuergerät 46 wird im Takt der 50 Hz-Netzfrequenz betrieben. Zu diesem Zweck ist der Eingang eines mehrstufigen Frequentteilers 28 an die Netzfrequenz angeschlossen . An einem Ausgang des binären Frequenzteilers 28 wird eine Rechteckspannung mit einer Frequenz von 50/64 Hz = 0,78 Hz abgenommen. Diese Rechteckspannung wird einem Integrator 30, bestehend aus einem kapazitiv rückgekoppelten Verstärker, zugeführt, so daß am Ausgang des Integrators eine Dreieckspannung entsteht. Diese Dreieckspannung wird dem Verstärker 31 zugeführt, der einen hohen Ausgangswiderstand aufweist und somit imstande ist, der Spule des Elektromagneten 11 den Dreieckstrom bzw. Trapezstrom mit einer Frequenz von 0,78 Hz einzuprägen.

Die Steuerung der Schalter 24 und 25 erfolgt über die UND-Tore 32 und 33. Sofern die Eingänge dieser Tore mit einem Punkt versehen sind, handelt es sich um Negierungseingänge.

In den Eingängen der Tore 32 und 33 sind die Ausgänge der Stufen des Frequenzteilers 28 derart zusammengefaßt, daß das Ausgangssignal jedes Tores 32, 33 nur in einem kurzen Intervall innerhalb einer jeden Periode des dreieckförmigen Magnetisierungsstromes vorhanden ist.

Der Frequenzteiler 28 könnte auch als Zähler betrachtet werden und die Ausgangsleitungen der verschiedenen Stufen könnten einem Digital/Analog-Umsetzer zugeführt werden, der dann die Funktion des Integrators 30 wahrnehmen würde.

Die bis jetzt beschriebene Schaltung ist bekannt. Nach der Erfindung sind die Eingänge des Differenzverstärkers 18 über den Schalter 35 mit Massepotential oder Null-Spannung verbindbar. Zwischen jedem Blockkondensator 16, 17 und den betreffenden Verstärkereingang ist ferner ein Schutzwiderstand 36 bzw. 37 geschaltet.

Der Schalter 35 wird über eine Steuerleitung 38 gesteuert, die an den Ausgang der vorletzten Stufe des Frequenzteilers 28 angeschlossen ist. Die Steuerleitung 38 steuert ferner einen weiteren Schalter 39, der den Integrator 30 kurzschließt, d.h. im geschlossenen Zustand den Ausgang des Integrators 30 mit dem Eingang verbindet. Zwischen den Ausgang des Integrators und Massepotential ist ferner eine Spannungsbegrenzerschaltung 40 aus zwei antiparallel geschalteten Zenerdioden geschaltet.

Die Tore 32 und 33 sind so geschaltet, daß der Schalter 24 kurze Zeit vor dem Zeitpunkt $t_1$ geschlossen wird, in dem der Magnetisierungsstrom seinen Maximalwert erreichen würde, wenn die Spannungsbegrenzerschaltung 40 nicht vorhanden wäre. Der Schalter 25 ist von dem Tor 33 derart gesteuert, daß er eine kurze Zeit vor dem Zeitpunkt $t_3$ schließt, in dem der Magnetisierungsstrom seinen unteren Extremwert erreichen würde, wenn die Spannungsbegrenzerschaltung 40 nicht vorhanden wäre.

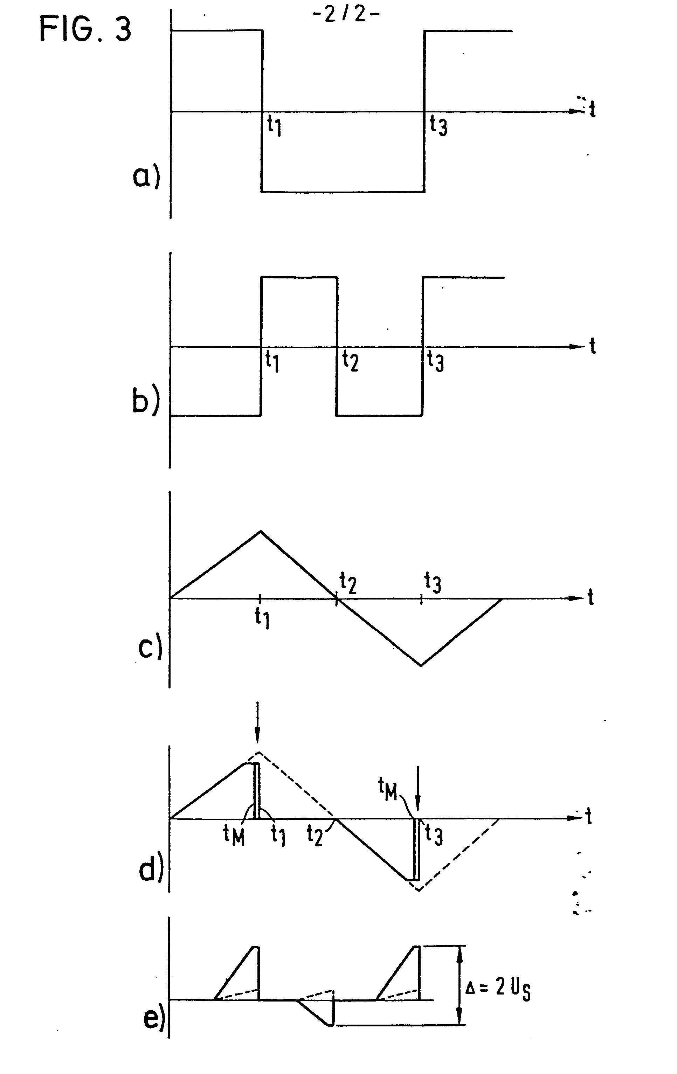

Figur 3a zeigt den Spannungsverlauf am Ausgang a der letzten Stufe des Frequenzteilers 28, während in Figur 3b der Spannungsverlauf b am Ausgang der vorletzten Stufe des Frequenzteilers 28 dargestellt ist. Figur 3c gibt den Spannungsverlauf wieder, der am Ausgang des Integrators 30 auftreten würde, wenn der zweite Schalter 39 und die Spannungsbegrenzerschaltung 40 nicht vorhanden wären.

Figur 3d zeigt dagegen den Spannungsverlauf der tatsächlich am Ausgang d des Integrators 30 auftritt, wenn der zweite Schalter 39 und der Spannungsbegrenzer 40 vorhanden sind.

Die Schalter 35 und 39 werden durch die in Figur 3b dargestellte Spannung in der Weise gesteuert, daß diese Schalter geöffnet, d.h. hochohmig, sind, wenn die Spannung am Ausgang b negativ ist und daß diese Schalter geschlossen, d.h. niederohmig sind, wenn die Spannung am Ausgang b positiv ist.

Daraus ergibt sich der in Figur 3d dargestellte Spannungsverlauf am Ausgang d des Integrators 30. Diese Spannung entspricht dem zeitlichen Verlauf des Erregerstromes i (t) durch die Magnetanordnung 11 sowie den zeitlichen Verlauf des erzeugten Magnetfeld B(t). Man erkennt, daß die Spannung am Ausgang d, ausgehend von dem Wert Null, mit der Zeit linear ansteigt, bis der Grenzwert der Begrenzerschaltung 40 erreicht ist. Von da an bleibt die Spannung bis zum Zeitpunkt $t_1$ konstant. Im Zeitpunkt $t_1$ schließen die Schalter 35 und 39. Durch das Schließen des Schalters 39 fällt die Spannung am Ausgang d auf den Wert Null ab, den sie bis zum Zeitpunkt $t_2$ beibehält. Im Zeitpunkt $t_2$ öffnen die Schalter 35 und 39 wieder, so daß jetzt ein negativer linearer Spannungsaufbau erfolgt. Wie aus Figur 3d hervorgeht, liegen die Meßzeitpunkte $t_M$, in denen jeweils einer der Schalter 24 und 25 geschlossen wird, unmittelbar vor den Zeitpunkten $t_1$ und $t_3$ in demjenigen Bereich, in dem die Spannung am Ausgang d durch die Begrenzerschaltung 40 begrenzt wird. Auf diese Weise erfolgt die Messung stets bei einem Magnetfeld definierter Stärke.

Figur 3e zeigt den Verlauf der in Figur 3d dargestellten Signalspannung bei Auftreten einer positiven Spannungsdrift, die durch die gestrichelten Linien angedeutet ist. Die Spannungsdrift wird in den Kurzschlußphasen des Schalters 35 stets auf Null zurückgeführt und bewirkt in den Öffnungszeiten beispielsweise eine Vergrößerung der positiven und eine Verkleinerung der negativen Spannungsanteile. Diese Unsymmetrie der entstehenden Spannungsmaxima wird aber in der Auswerteschaltung 14 durch den Differenzverstärker 26 wieder ausgeglichen. Auf diese Weise wird eine etwaige Drift des elektrochemischen Gleichspannungspotentials durch den Schalter 35
in Verbindung mit dem Differenzverstärker 26 eliminiert.

Wichtig ist, daß der Zeitpunkt des Öffnens des Schalters 35 mit dem Zeitpunkt des Null-Durchgangs der Signalspannung zusammenfällt. Anderenfalls würden Signalverfälschungen auftreten.

Bei dem Eingangsverstärker 18 handelt es sich um einen
echten Differenzverstärker mit symmetrischem Eingang.
Während der Meßphase, in der der Schalter an den Verstärkereingängen geöffnet ist, werden die Koppelkondensatoren 16, 17 durch den Eingangsstrom des Verstärkers
geladen. Wegen der Differenzbildung des Verstärkers
bleibt hiervon nur der durch Offsetstrom und die
Toleranz der Koppelkondensatoren bedingte Anteil übrig.
Dieser muß klein genug sein, um eine Übersteuerung des
Eingangs sicher zu verhindern. Der Rest wird unterdrückt durch die Differenzbildung von positivem und
negativem Extremwert des Nutzsignals. Da die Ladespannung der Kondensatoren zur Zeit des positiven
und negativen Extremwertes der Nutzspannung gleich
groß ist, fällt sie bei der Differenzbildung heraus.

A n s p r ü c h e

1. Induktiver Durchflußmesser mit einer elektrisch
   gesteuerten Magnetanordnung und mit Elektroden,
   die kapazitiv an eine Auswerteschaltung mit einem
   hochohmigen Eingangsverstärker angeschlossen sind,
   d a d u r c h   g e k e n n z e i c h n e t,
   daß der Eingang des Eingangsverstärkers (18) über
   einen periodisch betätigten Schalter (35) mit
   Null-Potential verbindbar ist.

2. Induktiver Durchflußmesser nach Anspruch 1, dadurch
   gekennzeichnet, daß der Verstärker (18) ein Differenzverstärker ist, dessen beide Eingänge über den
   Schalter (35) mit Null-Potential verbindbar sind.

3. Induktiver Durchflußmesser nach Anspruch 1 oder 2,
   dadurch gekennzeichnet, daß die Auswerteschaltung
   einen Steuerteil (28, 32, 33) enthält, der, wie an
   sich bekannt, die Ausgangssignale des Eingangsverstärkers (18) zu periodisch auftretenden Abtastzeitpunkten ($t_M$) Spannungsabtastspeichern (20, 21) zuführt, und daß der Schalter (35) von dem Steuerteil
   derart gesteuert ist, daß er nach jedem Abtastzeitpunkt ($t_M$) geschlossen wird.

4. Induktiver Durchflußmesser nach Anspruch 3, dadurch
   gekennzeichnet, daß der Steuerteil, wie an sich
   bekannt, eine von einer Impulsquelle gesteuerte
   Zählschaltung (28) enthält, deren Ausgänge (29)
   über Torschaltungen (32, 33) die Spannungsabtastspeicher (20, 21) steuern, und daß ein Ausgang (b)
   der Zählschaltung (28) mit der Steuerleitung (38) des Schalters (35) verbunden ist.

5. Induktiver Durchflußmesser nach einem der vorhergehenden Ansprüche, dadurch gekennzeichnet, daß der Steuerteil einen Stromgenerator (30, 31) für die Magnetanordnung (11) zur Erzeugung eines linear ansteigenden und linear abfallenden Erregerstromes steuert, und daß ein synchron mit dem Schalter (35) des Eingangsverstärkers (18) betätigter zweiter Schalter (39) vorgesehen ist, der den Stromgenerator in geschlossenem Zustand ausschaltet.

6. Induktiver Durchflußmesser nach Anspruch 5, dadurch gekennzeichnet, daß der Stromgenerator (30, 31) einen als Integrator (30) geschalteten Verstärker enthält, dem von der Zählschaltung (28) Rechtecksignale zugeführt werden, und daß der zweite Schalter (39) den Integrator (30) kurzschließt.

7. Induktiver Durchflußmesser nach Anspruch 6, dadurch gekennzeichnet, daß an den Ausgang des Integrators (30) eine Spannungsbegrenzerschaltung (40) angeschlossen ist.

FIG. 1

FIG. 2

FIG. 3

-2/2-

0027181